# EUROPÄISCHE PATENTSCHRIFT

(11) **EP 3 130 102 B1**
(45) Veröffentlichungstag und Bekanntmachung des Hinweises auf die Patenterteilung: **30.09.2020**
(21) Anmeldenummer: 15718168.6
(22) Anmeldetag: 08.04.2015
(51) Int. Cl.: H04L 9/08, H04B 10/2581, H04B 10/85, H04L 9/32, H04L 29/06, G02B 6/44

(54) **VERSCHLÜSSEUNG, ENTSCHLÜSSELUNGSSYSTEM FÜR MULTICORE FASER UND VERFAHREN ZUM ÜBERTRAGEN VERSCHLÜSSELTER DATEN**
ENCRYPTION AND DECRYPTION SYSTEM FOR MULTICORE FIBER AND METHOD TO TRANSMIT ENCRYPTED DATA
MÉTHODE DE CHIFFREMENT DE DÉCHIFFREMENT POUR FIBRE OPTIQUE MULTICORE ET MÉTHODE DE TRANSMISSION DE DONNÉES CHIFFRÉES

(30) Priorität: 11.04.2014 DE 102014207026
(43) Veröffentlichungstag der Anmeldung: 15.02.2017
(73) Patentinhaber: Fraunhofer-Gesellschaft zur Förderung der angewandten Forschung e.V., 80686 München (DE); timeproof GmbH, 82319 Starnberg (DE)
(72) Erfinder: FELLER, Olaf, 68150 Ribeauvillé (FR); TROPPENZ, Ute, 12524 Berlin (DE); GROTE, Norbert, 14052 Berlin (DE); MEHLHORN, Torsten, 14089 Berlin (DE)
(74) Vertreter: Zimmermann, Tankred Klaus
(86) Internationale Anmeldenummer: PCT/EP2015/057592
(87) Internationale Veröffentlichungsnummer: WO 2015/155221

(56) Entgegenhaltungen:
- WO-A1-2013/157245
- FR-A1- 2 912 020
- US-A1- 2012 177 065
- GUAN KYLE ET AL: "Information-theoretic security in space-division multiplexed fiber optic networks", 2012 38TH EUROPEAN CONFERENCE AND EXHIBITION ON OPTICAL COMMUNICATIONS, OSA, 16. September 2012 (2012-09-16), Seiten 1-3, XP032543889, [gefunden am 2014-01-08]
- WINZER P J ET AL: "Optical MIMO-SDM system capacities", OFC 2014, OSA, 9. März 2014 (2014-03-09), Seiten 1-3, XP032632918, DOI: 10.1109/OFC.2014.6886684 [gefunden am 2014-08-27]
- ATSUSHI OKAMOTO*A, KAZUYUKI MORITA A, YUTA WAKAYAMA A, JUNYA TANAKA A, KUNIHIRO SATO: "Mode division multiplex communication technique based on dynamicvolume hologram and phase conjugation", SPIE, PO BOX 10 BELLINGHAM WA 98227-0010, USA, 14. Mai 2010 (2010-05-14), XP040538039,
- "10-Gigabit-capable passive optical networks (XG-PON): Transmission convergence (TC) specifications; G.987.3 (10/10)", ITU-T STANDARD, INTERNATIONAL TELECOMMUNICATION UNION, GENEVA ; CH, Nr. G.987.3 (10/10), 7. Oktober 2010 (2010-10-07), Seiten 1-134, XP017588393, [gefunden am 2011-09-30]

## Beschreibung

Die vorliegende Erfindung bezieht sich auf das Gebiet der Datenübertragung, insbesondere auf das Gebiet einer abhörsicheren Datenübertragung.

Geschützte Datennetze und Übertragungsstrecken werden im Stand der Technik in erster Linie durch eine Verschlüsselung der Daten realisiert. Der Grad der erreichbaren Sicherheit lässt sich über die Komplexität der verwendeten Verschlüsselung einstellen, wobei aktuell insbesondere symmetrische Krypto-Algorithmen in sicherheitsrelevanten Netzen eingesetzt werden, z.B. AES, 3DES, wie dies beispielsweise in der Referenz [1] erläutert wird. Zur Übertragung von hohen Datenmengen in Datenzentren sowie in sogenannten Intra-Office-Verbindungen finden zunehmend aktive optische Kabel Einsatz, wobei es sich hier um Multimode-Fasern oder um Singlemode-Fasern handeln kann, die in Verbindung mit hochbitratigen Sendern und Empfängern arbeiten, wie dies beispielhaft in den Referenzen [2] und [3] erläutert wird. In solchen Nachrichtennetzen, die auf optischen Fasern basieren, aber auch in allen anderen Nachrichtennetzen, in denen sensible Daten ausgetauscht werden, wird ein hohes Maß an Datenschutz gefordert. Herkömmliche Ansätze, die im Stand der Technik bekannt sind, gewährleisten eine Abhörsicherheit in der Regel auf der Basis von verschiedenen Verschlüsselungstechnologien. Darüber hinaus ist es auch wünschenswert, eine überwachte Übertragungsstrecke bereitzustellen, um ein Abhören, Kopieren oder Stören der Daten zu verhindern bzw. zumindest zu erschweren und zu erkennen. Im Stand der Technik werden bisher keinerlei Sicherheitskonzepte eingesetzt, welche den physikalischen Aufbau der Übertragungsstrecke miteinbeziehen, beispielsweise den Aufbau von Glasfaserkabeln, so dass die physikalischen Eigenschaften der eigentlichen Übertragungsstrecke nicht direkt für das Sicherungsverfahren genutzt werden. Ferner wird im Stand der Technik für die Übertragungsstrecke keinerlei Unterscheidung zwischen Informationskanal und Datenkanal oder eine Mischung von beiden getroffen.

FR 2 912 020 A beschreibt ein Verfahren zum Verschlüsseln von Informationen mit einem gegebenen Code und Hinzufügen eines Gewichtungsfehlers zu den Informationen. Die Informationen und die Fehler werden in eine Anzahl von Abschnitten entsprechend einer Anzahl von unabhängigen Pfaden in einem Kommunikationsnetzwerk unterteilt. Eine Adresse eines Zielknotens im Netzwerk ist verschlüsselt, und Steuerinformationen der Adresse für jeden Abschnitt zugeordnet, wobei die Steuerinformation die Rekonstruktion der verschlüsselten Informationen am Zielknoten ermöglicht.

Weitere Ansätze zur sicheren Datenübertragung werden in folgenden Veröffentlichungen beschrieben:
GUAN KYLE ET AL, "Information-theoretic security in space-division multiplexed fiber optic networks", 2012 38TH EUROPEAN CONFERENCE AND EXHIBITION ON OPTICAL COMMUNICATIONS, OSA, (20120916), Seiten 1 - 3,
WINZER P J ET AL, "Optical MIMO-SDM system capacities", OFC 2014, OSA, (20140309), doi:10.1109/OFC.2014.6886684, Seiten 1 - 3,
ATSUSHI OKAMOTO*A, KAZUYUKI MORITA A, YUTA WAKAYAMA A, JUNYA TANAKA A, KUNIHIRO SATO, "Mode division multiplex communication technique based on dynamicvolume hologram and phase conjugation", SPIE, PO BOX 10 BELLINGHAM WA 98227-0010, USA, (20100514),
"10-Gigabit-capable passive optical networks (XG-PON): Transmission convergence (TC) specifications; G.987.3 (10/10)", ITU-T STANDARD, INTERNATIONAL TELECOMMUNICATION UNION, GENEVA ; CH, (20101007), no. G.987.3 (10/10), Seiten 1 - 134,
Die WO 2013/157245 beschreibt einen Ansatz, der zur Erzielung eine hohen Übertragungskapazität bei ausreichend zufriedenstellender Qualität in einem optischen Übertragungssystem, eine mehradrige optische Faser verwendet, bei der eine Ader Licht zur Überwachung von Übertragungsverlusten trägt.

Die US 2012/177065 A1 beschreibt einen Sender, der einen Codierer, eine Vielzahl von Modulatoren und einen räumlichen Multiplexer umfasst. Der Codierer ist konfiguriert, um einen oder mehrere Eingangsbitströme in eine Vielzahl von codierten Bitströmen zu codieren, die als Ausgabe vorgesehen sind. Jeder Modulator ist konfiguriert, um eine entsprechende der Vielzahl von codierten Bitströmen zu empfangen und zu modulieren und ein moduliertes Ausgangssignal zu liefern. Der räumliche Multiplexer ist konfiguriert, um die Vielzahl von modulierten Ausgangssignalen einer Multimode-Faser zuzuführen.

Ausgehend von diesem Stand der Technik liegt der vorliegenden Erfindung die Aufgabe zugrunde, einen verbesserten Ansatz zur Übertragung von Daten zu schaffen, der eine verbesserte Abhörsicherheit der Daten während der Übertragung gewährleistet.

Diese Aufgabe wird durch einen Codierer gemäß Anspruch 1, einen Decodierer gemäß Anspruch 6, einem System gemäß Anspruch 8, einem Verfahren gemäß Anspruch 12 oder 13, einem gemäß Anspruch 14 und einem Computerprogramm gemäß Anspruch 15 gelöst.

Gemäß der vorliegenden Erfindung wird ein Ansatz gelehrt, der die Sicherheit der Übertragung von Daten in Nachrichtennetzen nachhaltig erhöht, wobei dieser Ansatz nicht nur auf den im Stand der Technik bekannten und aktuell eingesetzten Krypto-Algorithmen basiert, wie beispielsweise AES, 3DES, sondern zusätzlich eine parallele Codierung vorschlägt, beispielsweise eine Codierung unter Verwendung einer Hash-Funktion, die unter Ausnutzung der physikalischen Eigenschaften des Übertragungskanals zusammen mit einer Aufteilung der zu übertragenden Datenblöcke in Teil-Datenblöcke eine erhöhte Abhörsicherheit gewährleistet. Grundsätzlich ermöglicht der erfindungsgemäße Ansatz auch eine sichere Übertragung unter Verwendung einer drahtlosen Kommunikation, dahin gehend, dass Manipulationen an den übertragenen Daten aufgrund des erfindungsgemäßen Ansatzes am Empfänger detektiert werden können
Gemäß Ausführungsbeispielen der Erfindung wird ein Ansatz geschaffen, um eine überwachte Übertragungsstrecke bereitzustellen, bei der Abhörversuche, Kopierversuche oder Störungen von Daten verhindert oder zumindest erschwert werden, wobei eine draht- bzw. faserbasierte Übertragungsstrecke für die Übertragung der Daten verwendet werden kann, deren physikalischen Eigenschaften ausgenutzt wird. Solche Ausführungsbeispiele verwenden eine draht- bzw. faserbasierte Übertragungsstrecke, die weitere Möglichkeiten bietet, um die Übertragung noch abhörsicherer zu machen. Gemäß bevorzugten Ausführungsbeispielen der vorliegenden Erfindung wird ein Ansatz geschaffen, der eine abhörsichere Hochgeschwindigkeits-Datenübertragung auf Grundlage paralleler optischer Verbindungen (Links) ermöglicht. Im Stand der Technik galten Glasfasernetze, die beispielsweise für hohe Datenraten und lange Übertragungsstrecken unabdingbar sind, als sicher im Vergleich zu rein elektronischen Systemen. Allerdings sind auch Glasfaserstrecken nicht absolut geschützt, da mit zerstörungsfreien Methoden, wie z.B. durch ein Krümmen der Faser, ein Auskoppeln des optischen Signals und damit der übertragenen Daten herbeigeführt werden kann. Ferner ist es möglich, durch eine mechanische Manipulation zu versuchen, das evaneszente optische Feld für Abhörzwecke zu nutzen, wodurch sich zwar ein minimaler optischer Verlust im Datensignal einstellt, der aber nur schwer zu detektieren ist. Ferner können solche Verluste auch andere Ursachen haben. Ein möglicher "Angriff' auf die Datenverbindung ist daher nur indirekt und auch nur schwer nachweisbar, beispielsweise basierend auf einer Lokalisierung der Störung, was aber ein aufwendiges Verfahren erfordert, welches in der Regel nicht synchron mit der Datenübertragung durchführbar ist, beispielsweise die Optical Time Domain Reflectormetry (OTDR). Im Gegensatz hierzu nutzen Ausführungsbeispiele der Erfindung auch die physikalischen Eigenschaften der Übertragungsstrecke für das Sicherheitsverfahren.

Ausführungsbeispiele der Erfindung schaffen somit eine abhörsichere, aktive optische Verbindung bestehend aus einem Prozessor-Teil, beispielsweise im Codierer, der die Datenverschlüsselung, die Hash-Wertberechnung und die zeitgestützte, zufällige Verteilung der verschlüsselten Datenblock-Anteile auf die optischen Kanäle durchführt. Ferner sind entsprechende schnelle optische Transmitter und Empfänger, inklusive entsprechender Treiber, vorgesehen sowie optische Multicore-Singlemode-Faser-Verbindungen.

Gemäß Ausführungsbeispielen wird die Sicherheit in mehreren Dimensionen gleichzeitig erreicht, und zwar dadurch, dass ein paralleler Sicherungsmechanismus auf der gesamten Datenverbindung einschließlich der Übertragungsstrecke angewendet wird, indem die Daten mithilfe eines parallelen Hash-Algorithmus gesichert werden, und die Ergebnisse der parallelen Sicherung auf parallele optische Links verteilt werden, wobei die Kardinalität des optischen Übertragungssignals identisch ist mit der Anzahl der parallelen Datenkanäle, deren Sicherheit synchron überwacht wird.

Nachfolgend werden Ausführungsbeispiele der vorliegenden Erfindung anhand der beiliegenden Zeichnungen näher erläutert. Es zeigen:
- Fig. 1: ein sicheres Datenübertragungssystems gemäß einem Ausführungsbeispiel der vorliegenden Erfindung;
- Fig. 2: ein Flussdiagramm, das die Funktionalität des Systems aus Fig. 1 gemäß einem Ausführungsbeispiel erläutert, wobei Fig. 2(a) die die Funktionalität des Codierers aus Fig. 1 erläutert, und wobei Fig. 2(b) die die Funktionalität des Decodierers aus Fig. 1 erläutert;
- Fig. 3: verschiedene Beispiele für die Realisierung eines abhörsicheren optischen Links unter Verwendung von Multicore-Fasern, wobei Fig. 3(a) eine Faser mit einer Mehrzahl von Kernen zeigt, die innerhalb eines gemeinsamen Claddings angeordnet sind, wobei Fig. 3(b) verschiedene Beispiele für die Belegung von Kernen in Multicore-Fasern als Daten- und Monitor-Kanäle zeigt, und wobei Fig. 3(c) ein Beispiel für ein solches Monitoring unter Verwendung einer Faser aus Fig. 3(b) zeigt;
- Fig. 4: ein sicheres Datenübertragungssystems gemäß einem weiteren Ausführungsbeispiel der vorliegenden Erfindung;
- Fig. 5: ein Flussdiagramm, das die Funktionalität des Systems aus Fig. 4 gemäß einem Ausführungsbeispiel erläutert; und
- Fig. 6: eine schematische Darstellung des erfindungsgemäßen Ansatzes gemäße Ausführungsbeispielen der Erfindung, wobei Fig. 6(a) die Verarbeitung eines Datenblocks in einem Codierer, wie er in Fig. 1 oder Fig. 4 dargestellt ist, zeigt, und wobei Fig. 6(b) die Verarbeitung eines Datenblocks in einem Decodierer, wie er in Fig. 1 oder Fig. 4 dargestellt ist, zeigt.

In der nachfolgenden Beschreibung der Ausführungsbeispiele der vorliegenden Erfindung werden gleiche oder gleichwirkende Elemente mit den gleichen Bezugszeichen versehen.

Die nachfolgende Beschreibung der bevorzugten Ausführungsbeispiele basiert auf einem Übertragungssystem, welches optische Verbindungen verwendet, beispielsweise MC-Fasern (MC = Multicore) oder Singlecore-Fasern. An dieser Stelle sei jedoch darauf hingewiesen, dass der grundsätzliche erfindungsgemäße Ansatz auch bei anderen Übertragungsverbindungen einsetzbar ist, beispielsweise bei einer drahtgebundenen Verbindung aber auch bei einer drahtlosen Kommunikation, da aufgrund des erfindungsgemäßen Ansatzes die Übertragung der sensiblen Daten in Datenblöcken erfolgt, die auf eine Mehrzahl von Unter-Kanälen aufgeteilt werden, deren Manipulation allein noch keine Entschlüsselung der Daten ermöglicht, vielmehr ist gleichzeitig eine massive Manipulation aller Teil-Kanäle erforderlich, um die für einen vollständigen Datenblock erforderlichen Informationen zu erlangen, was die Abhörsicherheit einer jeden Übertragungsstrecke, unabhängig von deren Ausgestaltung, deutlich erhöht.

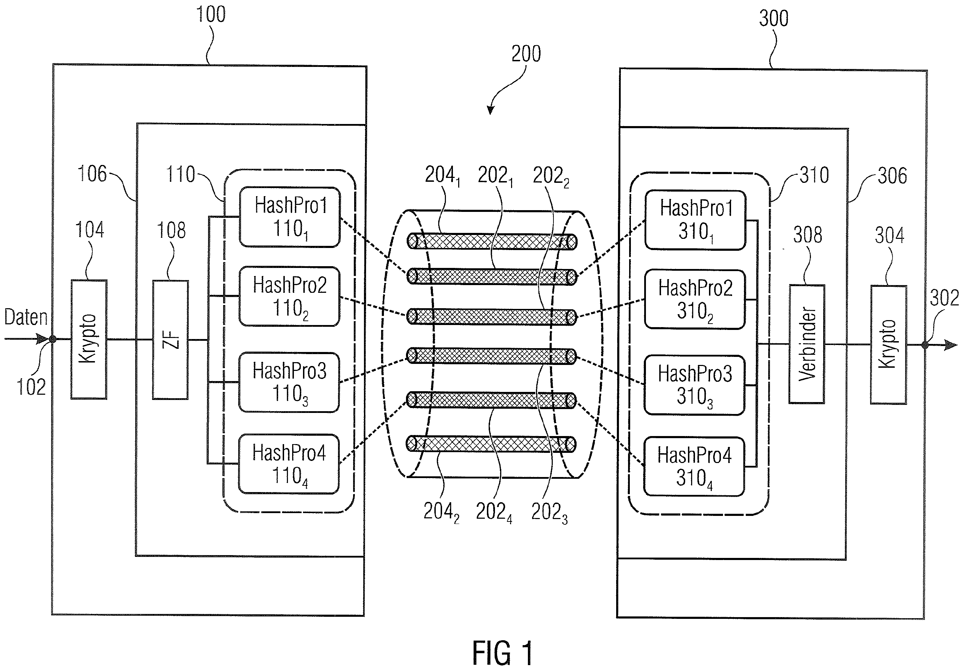

Anhand der Fig. 1 wird nachfolgend eine Struktur einer sicheren Datenverbindung gemäß einem Ausführungsbeispiel der vorliegenden Erfindung näher erläutert, wobei Fig. 1 ein Ausführungsbeispiel darstellt, bei dem vier parallele Prozessoren zur Hochgeschwindigkeits-Verschlüsselung/Entschlüsselung mittels symmetrischer Verschlüsselung vorgesehen sind, wobei ferner, erfindungsgemäß, parallele Hash-Algorithmen eingesetzt werden, sowie abhörsichere optische Faserverbindungen, die Datenkanäle und Überwachungs- bzw. Monitor-Kanäle umfassen. Das Übertragungssystem umfasst einen Codierer 100, der an einem Eingang 102 Daten empfängt, die zur Übertragung vorgesehen sind. Die am Eingang 102 empfangenen Daten werden einem Verschlüsselungs- bzw. Krypto-Prozessor 104 zugeführt, der auf an sich bekannte Art und Weise, beispielsweise unter Verwendung eines symmetrischen Krypto-Algorithmus, die empfangenen Daten verschlüsselt. Der Krypto-Prozessor 104 ist derart konfiguriert, dass basierend auf dem angewendeten Krypto-Algorithmus die empfangenen Daten blockweise verschlüsselt werden, so dass am Ausgang des Krypto-Prozessors 104 jeweils verschlüsselte Datenblöcke bereitstehen. Der verschlüsselte Datenblock wird einer Verarbeitungseinheit 106 bereitgestellt, die vorgesehen ist, um jeden der Datenblöcke für eine Übertragung über das Übertragungsmedium aufzuteilen. Die Verarbeitungseinheit 106 umfasst einen Zufallsprozessor 108, der basierend auf einer zeitgesteuerten Zufallsfunktion (ZF) jeden empfangenen Datenblock, der durch den Krypto-Algorithmus verschlüsselt wurde, zufällig auf die verfügbaren Kanäle des Übertragungsmediums aufteilt bzw. diesen zuordnet. Bei dem in Fig. 1 gezeigten Ausführungsbeispiel ist angenommen, dass das Übertragungsmedium vier Kanäle 1...4 umfasst. Die durch den Zufallsprozessor 108 erzeugten Teil-Blöcke werden einem Hash-Prozessor 110 bereitgestellt, der für jeden Kanal eine zugeordnete Hash-Einheit 110a bis 110₁ bis 110₄ umfasst.

Das in Fig. 1 dargestellte System umfasst ferner das Übertragungsmedium 200, welches bei dem dargestellten Ausführungsbeispiel ein optisches Übertragungsmedium ist, welches eine parallele optische Verbindung bereitstellt. Das Übertragungsmedium 200 umfasst eine Mehrzahl von parallelen optischen Datenverbindungen, bei dem dargestellten Ausführungsbeispiel, vier optische Datenkanäle 202₁ bis 202₄. Das Übertragungsmedium 200 umfasst zwei Monitor-Kanäle 204₁ und 204₂, die nachfolgend noch näher beschrieben werden. Bei dem Übertragungsmedium 200 handelt es sich beispielsweise um eine im Stand der Technik bekannte Multicore-Faser mit sechs Singlemode-Kernen 202₁ bis 202₄ und 204₁ bis 204₂, die die Daten- und Monitor-Kanäle bilden. Der Codierer ist aufgrund der vier Datenkanäle ausgestaltet, um einen verschlüsselten Datenblock auf eben diese vier Kanäle zufällig zu verteilen, so dass jeder Kanal einen 1/n-Anteil des verschlüsselten Datenblocks umfasst. Das Übertragungsmedium 200 ist vorgesehen, um den Codierer 100 mit einem Decodierer 300 zu koppeln, wobei der Decodierer die über das Medium 200 übertragenen Daten empfängt. Der Decodierer 300 umfasst einen Ausgang 302 zur Ausgabe der Daten, die durch den Decodierer entschlüsselt wurden. Ferner ist ein Krypto-Prozessor 304 vorgesehen, der die übertragenen und rekonstruierten, verschlüsselten Datenblöcke empfängt und diese entsprechend einem herkömmlichen, beispielsweisen symmetrischen Krypto-Algorithmus entschlüsselt und dem Ausgang 302 bereitstellt. Ferner umfasst der Decodierer eine Verarbeitungseinheit 306, die vorgesehen ist, um die parallel übertragenen Anteile eines Datenblocks im Hinblick auf eine manipulationsfreie Übertragung zu verifizieren und zu verbinden. Zu diesem Zweck umfasst die Verarbeitungseinheit den Verbinder 308, der vorgesehen ist, um die einzelnen Teil-Datenblöcke mit dem 1/n-Anteil an Daten des zu übertragenden Datenblocks zu dem Gesamtdatenblock für die Bereitstellung an den Krypto-Prozessor 304 zu verbinden. Die entsprechenden Teil-Datenblöcke werden nachfolgend zu der Verifizierung dem Verbinder 308 bereitgestellt, wobei für die Verifizierung ein Hash-Prozessor 310 vorgesehen ist, der bei dem dargestellten Ausführungsbeispiel vier Hash-Einheiten 310₁ bis 310₄ umfasst, die basierend auf den empfangenen Daten, wie nachfolgend näher erläutert wird, eine manipulationsfreie Übertragung verifizieren.

Nachfolgend wird die Funktionsweise der anhand der Fig. 1 dargestellten Struktur, insbesondere die Funktionsweise des Codierers 100 näher erläutert. Anschließend erfolgt eine Erläuterung der möglichen Übertragungsmedien, insbesondere im Zusammenhang mit der Ausgestaltung derselben als Multicore-Glasfasern.

Wie oben erwähnt, sind hohe Übertragungsraten oftmals erwünscht und werden unter Verwendung hochbitratiger Sender und Empfänger erreicht, wobei ferner eine Parallelisierung der Übertragung zur Erhöhung der Übertragungsraten beiträgt. Die erfindungsgemäße Lösung vereint hohe Datenraten über optische Faserstrecken mit höchster Abhörsicherheit. Das Sicherungsverfahren basiert auf einer Verwendung der in Fig. 1 gezeigten parallelen Hash-Prozessoren 110₁ bis 110₄, die den notwendigen Datendurchsatz gewährleisten. Auf der Encoder/Codiererseite erfolgt nicht nur die Verschlüsselung auf Basis von Parallelisierung, sondern auch Informationskanäle werden innerhalb der gesamten Sicherheitsverbindung einschließlich der Übertragungsstrecke parallel geführt. Das Zusammenführen zu einem vollständigen Datensignal erfolgt erst wieder am Decodierer/Decoder. Somit ist der erfindungsgemäße Parallelisierungsalgorithmus kongruent zum physikalischen Übertragungsmedium. Die im Krypto-Prozessor 104 durchgeführte Verschlüsselung erfolgt symmetrisch mit der kryptographisch erforderlichen Schlüssellänge, z.B. AES 512 [SYMBLOCK] am Eingang des Codierers. Die anschließende Verteilung der verschlüsselten SYMBLOCKs erfolgt mittels der zeitgesteuerten Zufallsfunktion (ZF) mit ausreichender Entropie mit der Kardinalität der optischen Übertragungsfasern, z.B. bei einer Quad-Faser wird der verschlüsselte SYMBLOCK auf vier Kanäle verteilt. Folgendes wird zur Übertragung über einen Kanal bereitgestellt:
A) der 1/n-Anteil des SYMBLOCKs,
B) die Kanal-Nummer n und
C) der Hash-Wert über A) und B).

Die Manipulation eines solchen Teil- oder Sub-Kanals ermöglicht noch keine Entschlüsselung der Daten, hierfür würde es einer gleichzeitigen, massiven Manipulation aller optischen Kanäle bedürfen. Dies ist jedoch zum heutigen Zeitpunkt lediglich für einzelne getrennte Fasern möglich, nicht jedoch für verbundene Multicore-Fasern, wie z.B. Quadcores. Gemäß dem anhand der Fig. 1 dargestellten Ausführungsbeispiel können die Sicherheitsstufen parallel aufgebaut sein, z.B. durch die parallelen Hash-Prozessoren HashPro1 bis HashPro 4, wobei die Sicherheitsstufen bzw. Sicherheitsebenen des Systems wählbar bzw. erweiterbar sind (z.B. kann eine Datenübertragung nur über einen Teil der vier Kanäle erfolgen). Parallele optische Datenübertragungsverbindungen 200 können flexibel an die Datenverschlüsselung angepasst werden, wobei die Zeit-zufallsgestützte Verteilung (ZF) der Teil-Datenblöcke, welche den 1/n-Anteil von verschlüsselten Daten enthalten, durch die zusätzliche Logik 108 realisiert wird. Im Decodierer 300 wird durch die Logik 306 eine manipulationsfreie Übertragung rein mathematisch verifiziert, was ohne Weiteres möglich ist, da alle zur Verifikation notwendigen Daten je Teil- oder Sub-Kanal vorhanden sind, ebenso wie die Kanal-Zuordnung je übertragenem, verschlüsseltem SYMBLOCK. Anschließend erfolgt dann eine Entschlüsselung im Krypto-Prozessor 304 des verifizierten SYMBLOCKs mit dem vereinbarten symmetrischen Schlüssel, wie es im Stand der Technik bekannt ist.

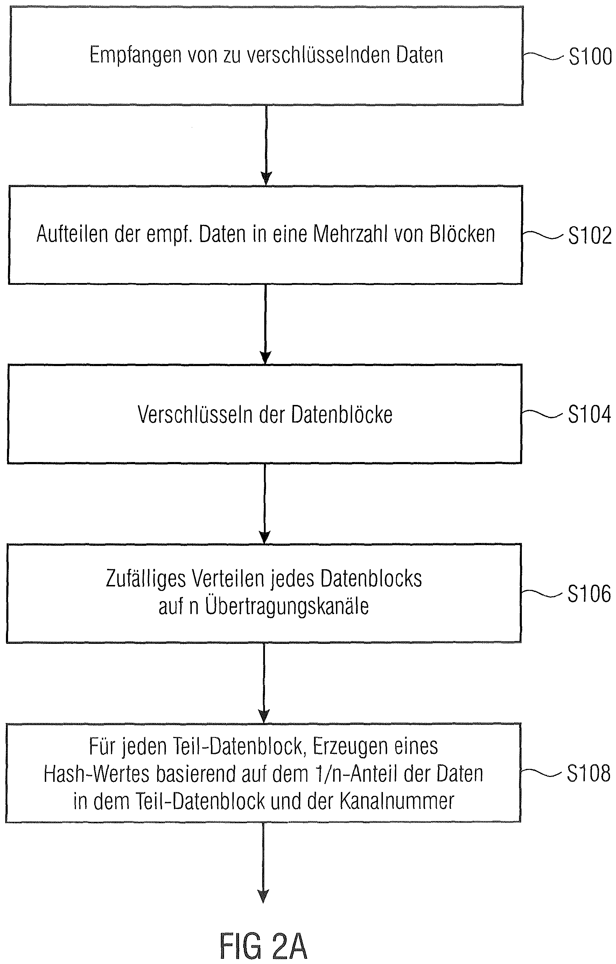

Die Fig. 2(a) zeigt ein Flussdiagramm, anhand dem die Funktionalität des Codierers 100 aus Fig. 1 gemäß einem Ausführungsbeispiel dargestellt wird. In einem ersten Schritt S100 werden die zu verschlüsselnden Daten empfangen und anschließend im Schritt S102 in eine Mehrzahl von Blöcken aufgeteilt, die dann im Schritt S104 verschlüsselt werden. Die nachfolgenden Schritte S106 und S108 erfolgen für jeden der Datenblöcke, wobei im Schritt S106 eine zufällige Verteilung jedes Datenblocks auf die n Übertragungskanäle erfolgt, wobei die Anzahl der Übertragungskanäle durch das für die Übertragung vorgesehene Übertragungsmedium (siehe z.B. das Medium 200 in Fig. 1) definiert ist. Nachdem die Datenblöcke auf die verschiedenen Kanäle zufällig verteilt wurden, ergeben sich entsprechende Teil-Datenblöcke, die jeweils einen 1/n-Anteil (n = Anzahl der Übertragungskanäle) der verschlüsselten Daten in dem entsprechenden Datenblock enthalten. Für jeden dieser Teil-Datenblöcke wird im Schritt S108 ein Hash-Wert erzeugt, und zwar basierend auf dem 1/n-Anteil an Daten des verschlüsselten Datenblocks in dem Teil-Datenblock und der Kanal-Nummer. Diese Informationen werden für eine Übertragung bereitgestellt.

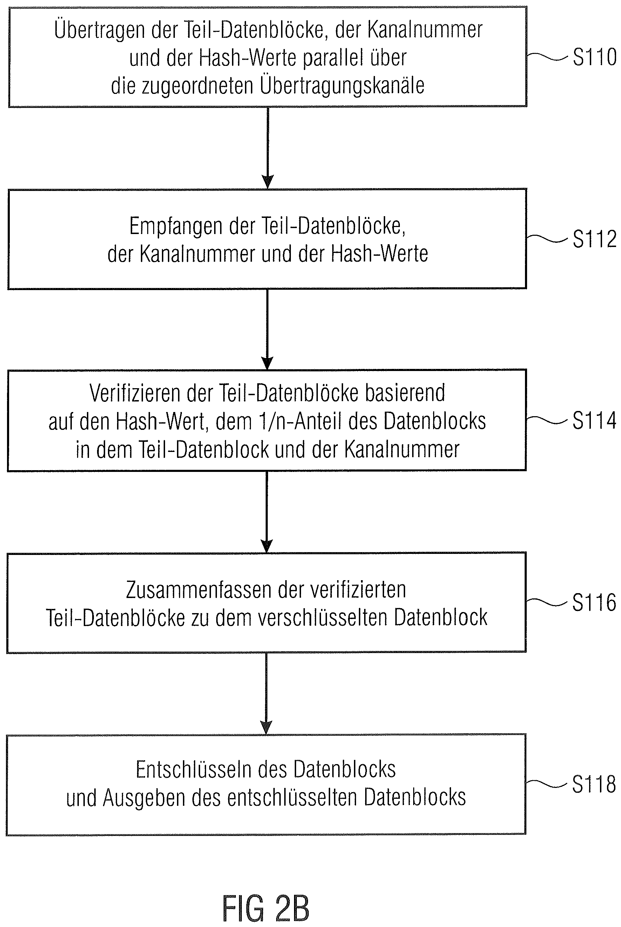

Die Fig. 2(b) zeigt die im Decodierer 300 durchzuführenden Schritte, wobei im Schritt S110 zunächst jeder der Teil-Datenblöcke, die gemäß Fig. 2(a) erzeugt wurden, übertragen wird, und zwar zusammen mit der Kanal-Nummer, die diesem Teil-Datenblock zugeordnet ist, und dem zugeordneten Hash-Wert. Die Mehrzahl der Teil-Datenblöcke eines verschlüsselten Datenblocks werden parallel über die zugeordneten Übertragungskanäle übertragen und im Schritt S112 empfangen, beispielsweise an dem Codierer 300, der in Fig. 1 gezeigt ist. Neben den Teil-Datenblöcken, also dem 1/n-Anteil an verschlüsselten Daten des verschlüsselten Datenblocks werden im Schritt S112 ferner die Kanal-Nummer und der zugeordnete Hash-Wert empfangen. Basierend auf diesen empfangenen Werten wird im Schritt S114 der empfangene Teil-Datenblock verifiziert, um zu bestimmen, ob die Übertragung manipulationsfrei war oder nicht. Im Falle einer manipulationsfreien Übertragung der Teil-Datenblöcke erfolgt im Schritt S116 das Zusammenfassen der Teil-Datenblöcke zu dem verschlüsselten Datenblock, der dann im Schritt S118 auf herkömmliche Art und Weise entschlüsselt werden kann, so dass die enthaltenen Daten in unverschlüsselter Form der weiteren Verarbeitung bereitgestellt werden können.

Gemäß bevorzugten Ausführungsbeispielen der vorliegenden Erfindung umfasst das Übertragungsmedium 200 ein optisches Übertragungsmedium, wobei die Übertragung unter Verwendung schneller optischer Komponenten die Umsetzung der Daten in optische Daten erfordert, die dann über das optische Verbindungsmedium übertragen werden, welches vorzugsweise eine Multicore-Singlemode-Faser umfasst. Die sichere optische Verbindung besteht vorzugsweise aus aktiven Multicore-Singlemode-Fasern, wie sie beispielsweise in den Referenzen [4] und [5] beschrieben werden. Mit einmodigen Faserstrecken lassen sich bei entsprechender optischer Leistung Signale über Strecken bis zu mehreren 10 km übertragen, ohne dass eine Regeneration nötig ist. Der optische Link bzw. die optische Verbindung bleibt somit abgeschlossen und unverändert. Bei der Verwendung von Multicore-Verbindungen sind alle Faserkerne innerhalb eines gemeinsamen Claddings geführt, und gemäß einer bevorzugten Ausführungsform der vorliegenden Erfindung wird eine solche Multicore-Verbindung zur Realisierung der abhörsicheren optischen Verbindung eingesetzt, wobei die Faserkerne, wie anhand der Fig. 1 bereits kurz erläutert wurde, zur Übertragung von Informationssignalen (siehe Kanäle 202₁ bis 202₄ in Fig. 1) und zur Übertragung von Überwachungssignalen (siehe Kanäle 204₁ und 204₂) genutzt werden.

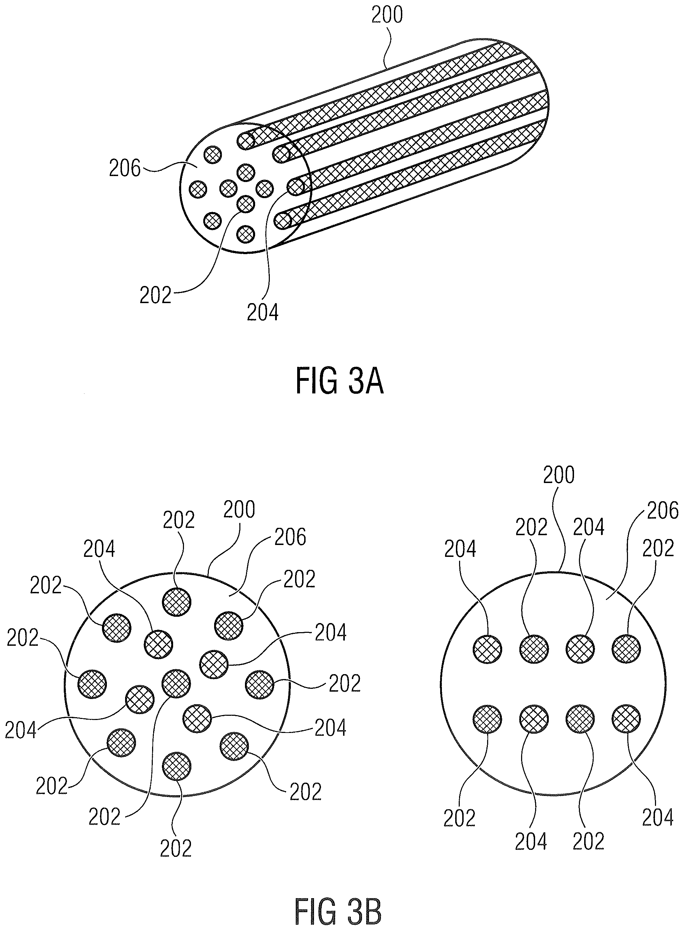

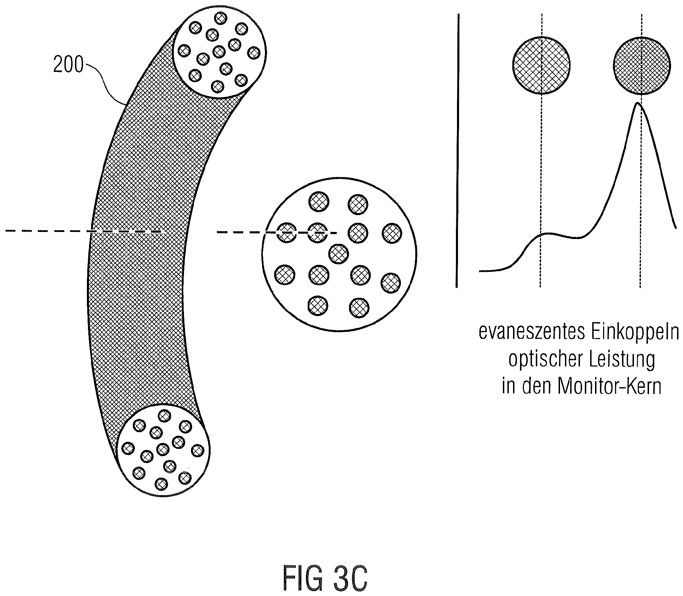

Die Fig. 3 zeigt verschiedene Beispiele für die Realisierung eines abhörsicheren optischen Links unter Verwendung von Multicore-Fasern. Fig. 3(a) zeigt die Faser 200 mit einer Mehrzahl von Kernen, die innerhalb eines gemeinsamen Claddings angeordnet sind, wobei eine erste Anzahl von Kanälen 204 benachbart zur Oberfläche der Faser 200 angeordnet ist, und eine zweite Anzahl von Kanälen 202 im Zentrum der Faser 200 angeordnet ist. Für die erfindungsgemäße parallele Übertragung werden gemäß Ausführungsbeispielen die zentralen Fasern 202 als Datenübertragungsfasern eingesetzt, und die peripheren Fasern 204 als Überwachungs- oder Monitor-Kanäle. Die Monitor-Faserkerne können z.B. zur Abschirmung der Daten-Kanäle verwendet werden, was ein "Verstecken" sensibler Daten erlaubt. Die Fig. 3(b) zeigt verschiedene Beispiele für die Nutzung von Daten- und Monitor-Kernen in Multicore-Fasern, wobei die Belegung der Kanäle grundsätzlich flexibel ist und auf den jeweiligen Fasertyp und den Anwendungstyp ohne Weiteres angepasst werden kann. In der linken Darstellung in Fig. 3(b) ist ein Faser 200 dargestellt, die eine Mehrzahl von Faserkernen innerhalb eines gemeinsamen Claddings 206 umfasst, wobei bei diesem Beispiel die Informations-Kanäle durch die peripher angeordneten Kerne 202 sowie durch einen zentralen Kern gebildet sind, und die Monitor-Kanäle 204 sind bezogen auf den Radius zwischen den äußeren Informations-Kanälen und den inneren Informations-Kanälen angeordnet. In der rechten Darstellung in Fig. 3(b) ist eine andere Anordnung der Informations- und Datenübertragungskanäle dargestellt, bei der die Kerne parallel zueinander in zwei Ebenen innerhalb des Claddings 206 der Faser 200 angeordnet sind, wobei sich sowohl in senkrechter Richtung als auch in horizontaler Richtung Monitor- und Datenkanäle stets abwechseln. In anderen Worten liegen nie zwei Kanäle des gleichen Typs direkt nebeneinander in vertikaler und horizontaler Richtung.

Die Monitor-Faserkerne können auf unterschiedliche Weise verwendet werden, beispielsweise zum Führen separater Überwachungssignale oder zum Detektieren evaneszenter optischer Felder des Datenträgers, falls an der optischen Faser Veränderungen, z.B. eine Biegung oder Ähnliches, vorgenommen wird. Fig. 3(c) zeigt ein Beispiel für ein solches Monitoring unter Verwendung einer Faser, welche eine Verteilung der Kanäle entsprechend der linken Darstellung in Fig. 3(b) aufweist. In der linken Figur der Fig. 3(c) ist die gebogene Faser 200 dargestellt und in der rechten Figur ist zu erkennen, dass aufgrund der Krümmung ein evaneszentes Einkoppeln zusätzlicher optischer Leistung aus den anderen Kanälen in die Monitor-Kanäle bzw. Monitor-Kerne erfolgt. Bei anderen Ausführungsformen ist es auch möglich, die Überwachungskanäle mit Gleichlicht oder modulierten Signalen zu beaufschlagen, so dass beim Abhören mittels evaneszenter Auskopplung Datensignale optisch überlagert und damit gestört werden. Die Verbindung mit den schnellen optischen Transmittern und Receivern, die Teil der Codierer/Decodierer sind, kann über Einzelkomponenten realisiert werden oder über Bauelemente-Arrays, wobei auf eine für die Anwendung angepasste flexible Zuordnung der Faserkernbelegung zu achten ist.

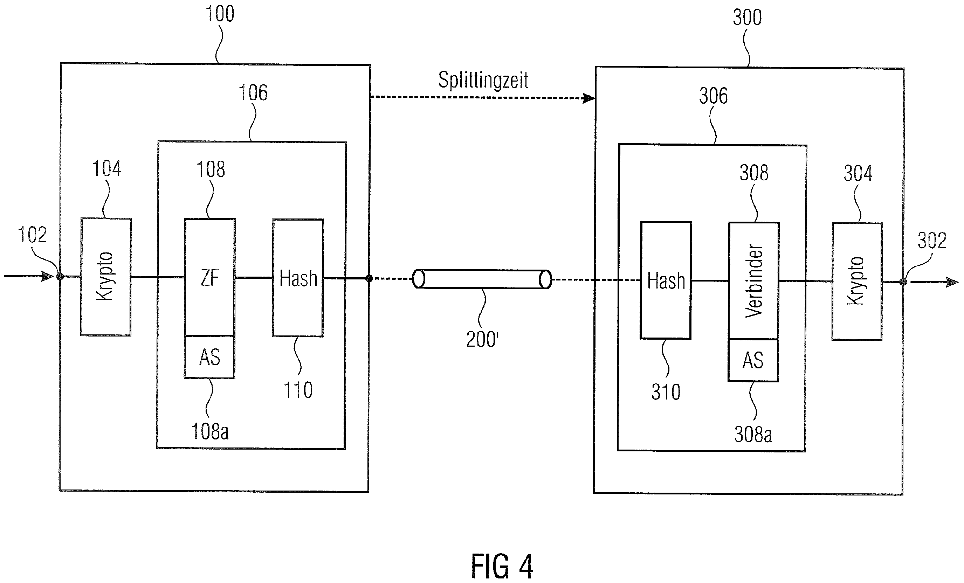

Die oben erläuterten Ausführungsbeispiele verwendeten als Übertragungsmedium Multicore-Fasern, welche eine Parallelisierung der Datenübertragung ermöglichen. Gemäß anderen Ausführungsformen der vorliegenden Erfindung können aber auch einfachere Monomode-Fasern eingesetzt werden, wie dies schematisch in Fig. 4 dargestellt ist. Fig. 4 zeigt eine Konfiguration eines Übertragungssystems ähnlich der Konfiguration, die in Fig. 1 gezeigt ist, wobei diejenigen Elemente, die bereits anhand der Fig. 1 beschrieben wurden, mit den gleichen Bezugszeichen versehen sind und nicht nochmals erläutert werden. Anstelle des Übertragungsmediums mit einer Mehrzahl von parallelen Kanälen wird bei dem in Fig. 4 dargestellten Ausführungsbeispiel ein Übertragungsmedium mit nur einem Übertragungskanal, beispielsweise in Form einer Monomode-Faser verwendet. Diese Ausgestaltung substituiert die physikalische Sicherungsschicht durch eine weitere kryptographische Sicherungsschicht, was z.B. dadurch erfolgt, dass die zeitgesteuerte Zufallsfunktion 108 um eine asymmetrische Verschlüsselung 108a erweitert wird. Bei der Übertragung über eine Monomode-Faser erfolgt die Übertragung über eine vorbestimmte Zeitdauer in entsprechenden Zeitabschnitten oder Slots, die zeitlich aufeinanderfolgend über die Faser übertragen werden. Bei der in Fig. 4 dargestellten Ausführungsform wird somit anstatt der Kanal-Nummer die sogenannte Splitting-Zeit für den SYMBLOCK von dem Codierer 100 an den Decodierer 300 übergeben, wobei der Decodierer 300 mit der gleichen zeitgesteuerten Zufallsfunktion ZF die Kanal-Nummer für den zugehörigen Hash-Wert ermittelt, wobei zusätzlich eine asymmetrische Entschlüsselung 308a erforderlich ist. Eine Erhöhung der kryptographischen Stärke des in Fig. 4 gezeigten Systems kann durch die Vermehrung der physikalischen Kanäle erfolgen, als auch durch Bereitstellung einer weiteren oder mehrerer weiterer Monomode-Fasern.

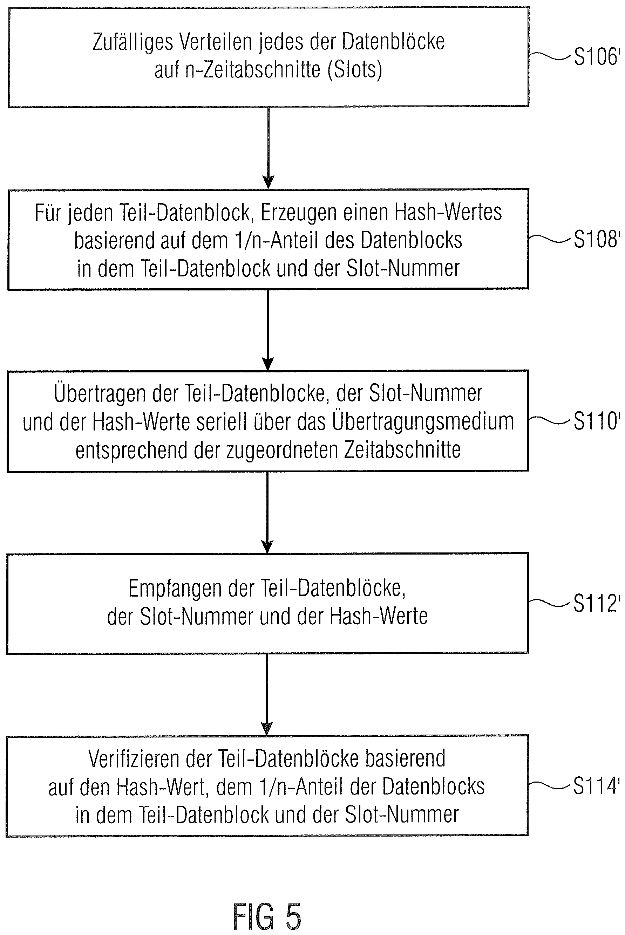

Die Fig. 5 zeigt ein Flussdiagramm der bei der Ausgestaltung gemäß Fig. 4 durchzuführenden Schritte, wobei Fig. 5 die gegenüber der Fig. 2 geänderten Schritte darstellt. Im Schritt S106' erfolgt eine zufällige Verteilung jedes der Datenblöcke auf n-Zeitabschnitte (Slots), und nachfolgend wird im Schritt S108' basierend auf dem 1/n-Anteil der Daten des Datenblocks in dem Teil-Datenblock und basierend auf der Slot-Nummer ein Hash-Wert erzeugt. Die so gewonnenen Daten werden im Schritt S110' übertragen und im Schritt S112' am Decoder empfangen und dort im Schritt S114' entsprechend verifiziert.

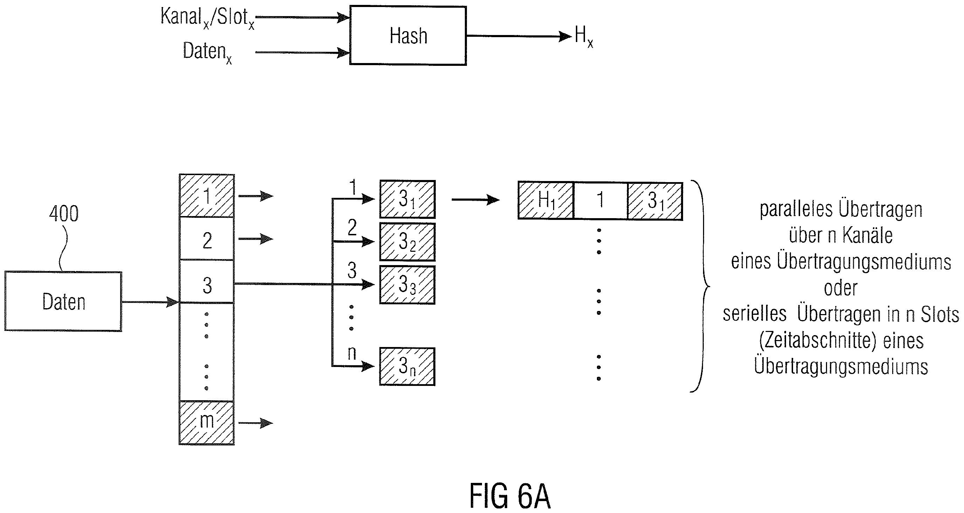

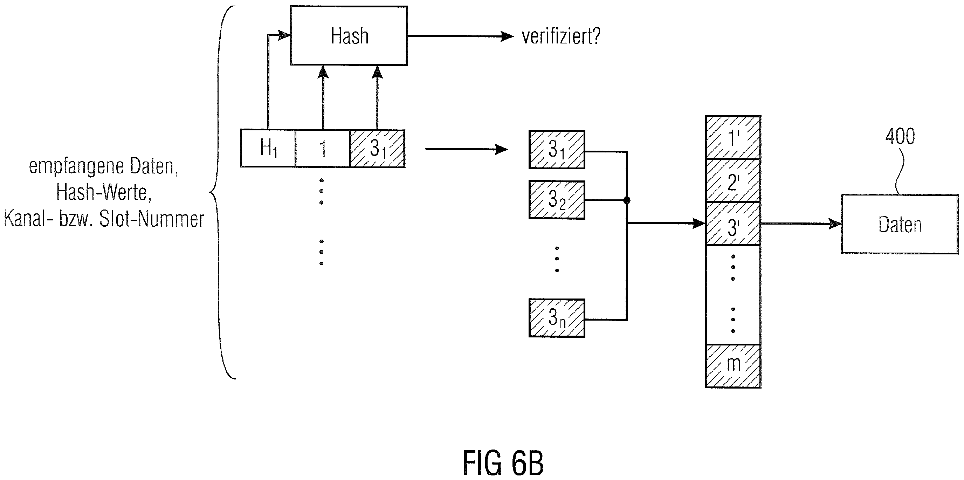

Die Fig. 6 erläutert anhand der verschiedenen Datenblöcke den erfindungsgemäßen Ansatz, wie er oben erläutert wurde. Fig. 6(a) zeigt die Verarbeitung eines Datenblocks im Codierer 300, wie er in Fig. 1 oder Fig. 4 dargestellt ist. Die Daten 400 werden im Codierer entsprechend einem herkömmlichen Verfahren, beispielsweise aufgrund eines symmetrischen Verschlüsselungsverfahrens blockweise verschlüsselt, so dass sich die Blöcke 1, 2, 3 ... m, die die verschlüsselten Daten für die jeweiligen Datenblöcke enthalten, ergeben. In Fig. 6(a) wird nun beispielhaft der verschlüsselte Datenblock 3 betrachtet, der zufällig auf die n-Kanäle des Übertragungsmediums aufgeteilt wird, und zwar entweder auf die parallelen Kanäle oder die zeitlich aufeinanderfolgenden Slots des Übertragungsmediums, so dass sich die in Fig. 6 dargestellten Teil-Blöcke 3₁ bis 3ₙ ergeben. Basierend auf der jeweils zugeordneten Kanal-Nummer/Slot-Nummer und den Daten in den Teil-Datenblöcken 3₁ bis 2ₙ wird ein Hash-Wert erzeugt, so dass sich beispielsweise für den Teil-Block 3₁ als zu übertragende Daten die Folgenden ergeben, Hash-Wert H₁, Kanal-Nummer 1 und 1/n-Anteil der Daten 3₁. Die Daten werden entweder parallel oder seriell übertragen, wie dies oben anhand der Fig. 1 und 4 erläutert wurde. Fig. 6(b) zeigt die Vorgehensweise im Decodierer 300, der die Daten, die Hash-Werte und die Kanal- bzw. Slot-Nummer empfängt, also für den Teil-Block 3₁ die Werte H₁, 1 und 3₁. Basierend auf diesen Werten wird über eine Hash-Funktion verifiziert, ob eine Manipulation der Daten stattgefunden hat. Sind die Daten verifiziert, so wird der 1/n-Anteil der Daten 3₁ bereitgestellt und mit den anderen empfangenen Teil-Blöcken zum Block 3 zusammengeführt, der dann der blockweisen Entschlüsselung zugeführt wird, so dass sich am Ende die Gesamtdaten 400 ergeben.

Ausführungsbeispiele der Erfindung wurden unter Bezugnahme auf einen Codierer beschrieben, der die Datensignale blockweise verschlüsselt und jeden verschlüsselten Datenblock auf eine Mehrzahl von Datenkanäle für eine parallel Übertragung über die optische Multicore-Faser aufteilt. Die vorliegende Erfindung ist nicht auf diese Ausführungsbeispiele beschränkt.

Gemäß einem weiteren Aspekt der vorliegenden Erfindung wird eine sichere Übertragung von Daten durch Verwendung der oben beschriebenen Multicore-Faser erreicht, bei der, wie es anhand der Fig. 3 beschrieben wurde, zumindest ein Kern einen Datenkanal 202₁-202₄ für eine Übertragung der Daten definiert, und bei der zumindest ein Kern einen Überwachungskanal 204₁, 204₂ definiert. Der Überwachungskanal 204₁, 204₂ ist vorgesehen, um ein optisches Überwachungssignal oder Störsignal zu führen oder um ein evaneszentes optisches Feld eines Datensignals in dem Datenkanal 202₁-202₄ zu empfangen. Das evaneszente optische Feld des Datensignals in dem Datenkanal 202₁-202₄ wird durch eine Krümmung der Multicore-Faser 200 bewirkt, so dass zusätzliche optische Leistung aus dem Datenkanal 202₁-202₄ in den Überwachungskanal 204₁, 204₂ übertragen wird. Bei anderen Ausführungsformen wird der Überwachungskanal 204₁, 204₂ mit Gleichlicht oder einem modulierten optischen Signal beaufschlagt, so dass eine evaneszente Auskopplung eines Datensignals das Signal in dem Überwachungskanal 204₁, 204₂ optisch überlagert, wodurch eine detektierbare Störung hervorgerufen wird.

Bei diesen Ausführungsbeispielen können sowohl verschlüsselte Daten als auch unverschlüsselte Daten sicher übertragen werden. Die Daten werden über das erfindungsgemäße Übertragungsmedium sicher übertragen, da durch die verwendeten Überwachungskanäle eine Manipulation der Faser und/oder ein Auskoppeln von Daten sicher und zuverlässig erkannt werden kann, z.B. basierend auf einem evaneszenten optischen Feld in dem Überwachungskanal aufgrund des Datensignals in dem Datenkanal. Anders als bei bekannte Ansätzen zur Überwachung ist der erfindungsgemäße Ansatz vorteilhaft, da aufgrund der Überwachung über den Überwachungskanal eine Manipulation ohne großen messtechnischen Aufwand, schnell (nahezu in Echtzeit) und zuverlässig detektiert wird, so dass frühzeitig Gegenmaßnahmen getroffen werden können, z.B. eine Unterbrechung der Übertragung. Ein weiterer Vorteil besteht darin, dass die Übertragung eines Datensignals zusammen mit einem Signal (optisches Störsignal) in dem Überwachungskanal selbst beim Auslesen von Daten aus der Faser (z.B. durch Krümmen der Faser) keine brauchbaren Daten liefert, da durch das Krümmen der Faser die auslesbaren bzw. detektierbaren optischen Signale eine nicht-trennbare Überlagerung der durch die Krümmung hervorgerufenen evaneszenten optischen Felder des Signals in dem Überwachungskanal und des Signals in dem Datensignal darstellen. Mit anderen Worten wird das Datensignal beim Versuch der Manipulation der Faser durch das optische Signal (Licht) in dem Überwachungskanal geschützt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen:

[1] "Tentative SHA-3 standard (FIPS XXX) development timeline" NIST, Retrieved 2013-05-27, NIST SHA-3 pages and the hash-forum list
[2] http://www.luxtera.com
[2] http://www.finisar.com
[4] M.-J. Li, B. Hoover, V. N. Nazarov, und D. L. Butler, "Multicore Fiber for Optical Interconnect applications", 2012 17th Opto-Electronics and Communications Conference (OECC2012) Technical Digest, Paper 5E4-2
[5] R. Ryf, et. al., "Space-Division Multiplexed Transmission over 4200-km 3-Core Microstructured Fiber", PDP5C.2, Optical Fiber Communication Conference and Exposition (OFC/NFOEC), 2012

## Patentansprüche

1. Codierer zum Bereitstellen von verschlüsselten Daten für eine Übertragung über ein Übertragungsmedium (200), mit:
einer Verschlüsselungseinheit (104), die konfiguriert ist, um an dem Codierer (100) empfangene Daten (400) blockweise zu verschlüsseln; und
einer Verarbeitungseinheit (106), die konfiguriert ist, um
einen verschlüsselten Datenblock zufällig auf eine Mehrzahl von Kanälen zu verteilen, die dem Übertragungsmedium (200) zugeordnet sind, so dass sich entsprechende Teilblöcke ergeben, die jeweils einen Anteil der verschlüsselten Daten in dem verschlüsselten Datenblock enthalten, und
jeden der über einen der Kanäle zu übertragenden Teilblöcke zusammen mit einer dem Kanal zugeordneten Kanalidentifizierung und einem Codewert, der auf den verschlüsselten Daten in dem zu übertragenden Teilblock und der Kanalidentifizierung basiert, zur Übertragung über den zugeordneten Kanal des Übertragungsmediums (200) bereitzustellen.
wobei das Übertragungsmedium (200) eine optische Multicore-Faser umfasst, wobei ein Kern der Multicore-Faser einen Kanal definiert, wobei die Verarbeitungseinheit (106) konfiguriert ist, um die Teilblöcke für eine parallele Übertragung über die Multicore-Faser bereitzustellen, und wobei die Kanalidentifizierung eine Kanalnummer, die dem zu übertragenden Teilblock zugeordnet ist, angibt.

2. Codierer gemäß Anspruch 1, bei dem zumindest ein Kern der Multicore-Faser einen Überwachungskanal (204₁, 204₂) definiert, und bei dem die Verarbeitungseinheit (106) ferner konfiguriert ist, um ein oder mehrere Überwachungssignale für eine Übertragung über den zumindest einen Überwachungskanal (204₁, 204₂) bereitzustellen, wobei das Überwachungssignal gewählt ist, um eine Veränderung an der Multicore-Faser zu erfassen.

3. Codierer gemäß Anspruch 1 oder 2, bei dem der Codewert einen Hashwert über die verschlüsselten Daten in dem zu übertragenden Teilblock und die Kanalidentifizierung umfasst.

4. Codierer gemäß Anspruch 3, bei dem die Verarbeitungseinheit (106) eine Logik zum Aufteilen des verschlüsselten Datenblocks und eine Mehrzahl von Hashprozessoren (110, 110₁-110₄) zum Erzeugen von Hashwerten basierend auf den verschlüsselten Daten in dem zu übertragenden Teilblock und der Kanalidentifizierung umfasst.

5. Codierer gemäß einem der Ansprüche 1 bis 4, bei dem die Verschlüsselungseinheit (104) konfiguriert ist, um eine symmetrische Verschlüsselung der an dem Codierer empfangenen Daten zu bewirken.

6. Decodierer zum Entschlüsseln von Daten, die durch den Codierer gemäß einem der Ansprüche 1 bis 5 bereitgestellt und über das Übertragungsmedium (200) übertragen werden, mit:
einer Verarbeitungseinheit (306), die konfiguriert ist, um
basierend auf dem empfangenen Codewert, dem Anteil des verschlüsselten Datenblocks in Teilblock und der dem Kanal zugeordneten Kanalidentifizierung eine manipulationsfreie Übertragung der Daten zu verifizieren, und
die empfangenen Teilblöcke zu einem verschlüsselten Datenblock zusammenzufassen; und
einer Entschlüsselungseinheit (304), die konfiguriert ist, um den verschlüsselten Datenblock zu entschlüsseln.

7. Decodierer gemäß Anspruch 6, die Verarbeitungseinheit (106) ferner konfiguriert ist, um basierend auf einem oder mehreren empfangenen Überwachungssignalen eine Veränderung an der Multicore-Faser (200) zu erfassen.

8. System zum Übertragen von Daten, mit:
einem Codierer (100) gemäß einem der Ansprüche 1 bis 5 zum Bereitstellen von verschlüsselten Daten für eine Übertragung; und
einem Übertragungsmedium (200) zum Übertragen der durch den Codierer (100) bereitgestellten Daten.

9. System gemäß Anspruch 8, bei dem das Übertragungsmedium (200) eine optische Multicore-Faser umfasst, wobei ein Kern der Multicore-Faser einen Kanal definiert, und einem Kanal eine Kanalnummer zugeordnet ist.

10. System gemäß Anspruch 9, bei dem zumindest ein Kern der Multicore-Faser einen Überwachungskanal (204₁, 204₂) zur Übertragung eines oder mehrerer Überwachungssignale definiert, um eine Veränderung an der Multicore-Faser zu erfassen.

11. System gemäß einem der Ansprüche 8 bis 10, mit einem Decodierer (300) gemäß Anspruch 6 oder 7 zum Entschlüsseln von über das Übertragungsmedium (200) übertragenen Daten.

12. Verfahren zum Bereitstellen von verschlüsselten Daten für eine Übertragung über ein Übertragungsmedium (200), mit folgenden Schritten:
blockweises Verschlüsseln (S104) von Daten;
zufälliges Verteilen (S106, S106') eines verschlüsselten Datenblocks auf eine Mehrzahl von Kanälen, die dem Übertragungsmedium (200) zugeordnet sind, so dass sich entsprechende Teilblöcke ergeben, die jeweils einen Anteil der verschlüsselten Daten in dem verschlüsselten Datenblock enthalten, und
Bereitstellen (S108,S110, S108', S110') jedes der über einen der Kanäle zu übertragenden Teilblöcke zusammen mit einer dem Kanal zugeordneten Kanalidentifizierung und einem Codewert, der auf den verschlüsselten Daten in dem zu übertragenden Teilblock und der Kanalidentifizierung basiert, zur Übertragung über den zugeordneten Kanal des Übertragungsmediums (200),
wobei das Übertragungsmedium (200) eine optische Multicore-Faser umfasst, wobei ein Kern der Multicore-Faser einen Kanal definiert, und die Teilblöcke für eine parallele Übertragung über die Multicore-Faser bereitgestellt werden, wobei die Kanalidentifizierung eine Kanalnummer, die dem zu übertragenden Teilblock zugeordnet ist, angibt.

13. Verfahren zum Entschlüsseln von Daten, die durch das Verfahren gemäß Anspruch 12 bereitgestellt werden und über das Übertragungsmedium (200) übertragen werden, mit folgenden Schritten:
Verifizieren (S114, S114') einer manipulationsfreien Übertragung der Daten basierend auf dem empfangenen Codewert, dem Anteil des verschlüsselten Datenblocks in dem Teilblock und der dem Kanal zugeordneten Kanalidentifizierung;
Zusammenfassen (S116) der empfangenen Teilblöcke zu dem verschlüsselten Datenblock; und
Entschlüsseln (S118) des verschlüsselten Datenblock.

14. Verfahren zum Übertragen von Daten über ein Übertragungsmedium (200), mit:
Bereitstellen (S100-S108, S100-S108') von verschlüsselten Daten für eine Übertragung über ein Übertragungsmedium (200) gemäß Anspruch 12 oder 13;
Übertragen (S110, S110') der Daten über das Übertragungsmedium (200); und
Entschlüsseln (S112- S118, S112'-S118) der übertragenen Daten gemäß Anspruch 13.

15. Computerprogramm mit Anweisungen zum Ausführen des Verfahrens gemäß einem der Ansprüche 12 bis 14, wenn die Anweisungen durch einen Computer ausgeführt werden.

## Claims

1. Encoder for providing encrypted data for transmission via a transmission medium (200), comprising:
an encryption unit (104) configured to encrypt data (400) received at the encoder (100) block by block; and
a processing unit (106) configured to
distribute an encrypted data block randomly to a plurality of channels allocated to the transmission medium (200) such that corresponding sub-blocks result, each including a portion of the encrypted data in the encrypted data block, and
provide each of the sub-blocks to be transmitted via one of the channels together with channel identification allocated to the channel and a code value that is based on the encrypted data in the sub-block to be transmitted and the channel identification, for transmission via the allocated channel of the transmission medium (200).
wherein the transmission medium (200) includes an optical multicore fiber, wherein one core of the multicore fiber defines a channel, wherein the processing unit (106) is configured to provide the sub-blocks for parallel transmission via the multicore fiber, wherein the channel identification indicates a channel number allocated to the sub-block to be transmitted.

2. Encoder according to claim 1, wherein at least one core of the multicore fiber defines a monitor channel (204₁, 204₂) and wherein the processing unit (106) is further configured to provide one or several monitoring signals for transmission via the at least one monitor channel (204₁, 204₂), wherein the monitoring signal is selected to detect a change of the multicore fiber.

3. Encoder according to claims 1 or 2, wherein the code value includes a hash value for the encrypted data in the sub-block to be transmitted and the channel identification.

4. Encoder according to claim 3, wherein the processing unit (106) includes logic for dividing the encrypted data block and a plurality of hash processors (110, 110₁ - 110₄) for generating hash values based on the encrypted data in the sub-block to be transmitted and the channel identification.

5. Encoder according to one of claims 1 to 4, wherein the encryption unit (104) is configured to effect symmetrical encryption of the data received at the encoder.

6. Decoder for decrypting data provided by the encoder according to one of claims 1 to 5 and transmitted via the transmission medium (200), comprising:
a processing unit (306) that is configured to
verify, based on the received code value, the portion of the encrypted data block in the sub-block and the channel identification allocated to the channel, manipulation-free transmission of the data, and
combine the received sub-blocks to an encrypted data block; and
a decryption unit (304) that is configured to decrypt the encrypted data block.

7. Decoder according to claim 6, wherein the processing unit (106) is further configured to detect a change of the multicore fiber (200) based on one or several received monitoring signals.

8. System for transmitting data, comprising:
an encoder (100) according to one of claims 1 to 5 for providing encrypted data for transmission; and
a transmission medium (200) for transmitting the data provided by the encoder (100).

9. System according to claim 8, wherein the transmission medium (200) includes an optical multicore fiber, wherein one core of the multicore fiber defines one channel and one channel number is allocated to one channel.

10. System according to claim 9, wherein at least one core of the multicore fiber defines a monitor channel (204₁, 204₂) for transmitting one or several monitoring signals for detecting a change of the multicore fiber.

11. System according to one of claims 8 to 10, comprising a decoder (300) according to claim 6 or 7 for decrypting data transmitted by the transmission medium (200).

12. Method for providing encrypted data for transmission via a transmission medium (200), comprising the steps of:
block by block encrypting (S104) of data;
randomly distributing (S106, S106') an encrypted data block to a plurality of channels allocated to the transmission medium (200) such that corresponding sub-blocks result, each including a portion of the encrypted data in the encrypted data block, and
providing (S108, S110, S108', S110') each of the sub-blocks to be transmitted via one of the channels together with a channel identification allocated to the channel and a code value that is based on the encrypted data in the sub-block to be transmitted and the channel identification, for transmission via the allocated channel of the transmission medium (200),
wherein the transmission medium (200) includes an optical multicore fiber, wherein one core of the multicore fiber defines a channel, and the sub-blocks are provided for parallel transmission via the multicore fiber, wherein the channel identification indicates a channel number allocated to the sub-block to be transmitted.

13. Method for decrypting data provided by the method according to claim 12 and transmitted via the transmission medium (200), comprising the steps of:
verifying (S114, S114') manipulation-free transmission of the data based on the received code value, the portion of the encrypted data block in the sub-block and the channel identification allocated to the channel;
combining (S116) the received sub-blocks to the encrypted data block; and
decrypting (S118) the encrypted data block.

14. Method for transmitting data via a transmission medium (200), comprising:
providing (S100-S108, S100-S108') encrypted data for transmission via a transmission medium (200) according to claim 12 or 13;
transmitting (S110, S110') the data via the transmission medium (200); and
decrypting (S112-S118, S112'-S118) the transmitted data according to claim 13.

15. Computer program having instructions for executing the method according to one of claims 12 to 14 when the instructions are executed by a computer.

## Revendications

1. Codeur pour mettre à disposition des données cryptées pour une transmission par un support de transmission (200), avec:
une unité de cryptage (104) qui est configurée pour crypter par bloc les données (400) reçues au codeur (100); et
une unité de traitement (106) qui est configurée pour
répartir de manière aléatoire un bloc de données cryptées sur une pluralité de canaux qui sont associés au support de transmission (200), de sorte qu'il en résulte des blocs partiels correspondants qui contiennent, chacun, une part des données cryptées dans le bloc de données cryptées, et
mettre à disposition chacun des blocs partiels à transmettre par un des canaux ensemble avec une identification de canal associée au canal et une valeur de code qui est basée sur les données cryptées dans le bloc partiel à transmettre et l'identification de canal pour la transmission par le canal associé du support de transmission (200),
dans lequel le support de transmission (200) comporte une fibre optique multi-noyau, où un noyau de la fibre multi-noyau définit un canal, dans lequel l'unité de traitement (106) est configurée pour mettre à disposition les blocs partiels pour une transmission parallèle par la fibre multi-noyau, et dans lequel l'identification de canal indique un numéro de canal qui est associé au bloc partiel à transmettre.

2. Codeur selon la revendication 1, dans lequel au moins un noyau de la fibre multi-noyau définit un canal de surveillance (204₁, 204₂), et dans lequel l'unité de traitement (106) est par ailleurs configurée pour mettre à disposition un ou plusieurs signaux de surveillance pour une transmission par l'au moins un canal de surveillance (204₁, 204₂), où le signal de surveillance est sélectionné pour détecter un changement dans la fibre multi-noyau.

3. Codeur selon la revendication 1 ou 2, dans lequel la valeur de code comporte une valeur de hachage sur les données cryptées dans le bloc partiel à transmettre et l'identification de canal.

4. Codeur selon la revendication 3, dans lequel l'unité de traitement (106) comporte une logique destinée à diviser le bloc de données cryptées et une pluralité de processeurs de hachage (110, 110₁ à 110₄) destinés à générer des valeurs de hachage sur base des données cryptées dans le bloc partiel à transmettre et l'identification de canal.

5. Codeur selon l'une des revendications 1 à 4, dans lequel l'unité de cryptage (104) est configurée pour entraîner un cryptage symétrique des données reçues au codeur.

6. Décodeur pour décrypter les données qui sont mises à disposition par le codeur selon l'une des revendications 1 à 5 et sont transmises par le support de transmission (200), avec:
une unité de traitement (306) qui est configurée pour
vérifier, sur base de la valeur de code reçue, de la part du bloc de données cryptées dans le bloc partiel et de l'identification de canal associée au canal, une transmission sans manipulation des données, et
combiner les blocs partiels reçus pour obtenir un bloc de données cryptées; et
une unité de décryptage (304) qui est configurée pour décrypter le bloc de données cryptées.

7. Décodeur selon la revendication 6, dans lequel l'unité de traitement (106) est par ailleurs configurée pour détecter, sur base d'un ou plusieurs signaux de surveillance reçus, un changement dans la fibre multi-noyau (200).

8. Système de transfert de données, avec:
un codeur (100) selon l'une des revendications 1 à 5 destiné à mettre à disposition les données cryptées pour une transmission; et
un support de transmission (200) destiné à transmettre les données mises à disposition par le codeur (100).

9. Système selon la revendication 8, dans lequel le support de transmission (200) comporte une fibre optique multi-noyau, où un noyau de la fibre multi-noyau définit un canal, et à un canal est associé un numéro de canal.

10. Système selon la revendication 9, dans lequel au moins un noyau de la fibre multi-noyau définit un canal de surveillance (204₁, 204₂) pour la transmission d'un ou plusieurs signaux de surveillance pour détecter un changement dans la fibre multi-noyau.

11. Système selon l'une des revendications 8 à 10, avec un décodeur (300) selon la revendication 6 ou 7 destiné à décrypter les données transmises par le support de transmission (200).

12. Procédé pour mettre à disposition les données cryptées pour une transmission par un support de transmission (200), aux étapes suivantes consistant à:
crypter par bloc (S104) les données;
répartir de manière aléatoire (S106, S106') un bloc de données cryptées sur une pluralité de canaux qui sont associés au support de transmission (200), de sorte qu'il en résulte des blocs partiels correspondants qui contiennent, chacun, une part des données cryptées dans le bloc de données cryptées, et
mettre à disposition (S108, S110, S108', S110') chacun des blocs partiels à transmettre par l'un des canaux ensemble avec une identification de canal associée au canal et une valeur de code qui est basée sur les données cryptées dans le bloc partiel à transmettre et l'identification de canal, pour transmission par le canal associé du support de transmission (200),
dans lequel le support de transmission (200) comporte une fibre optique multi-noyau, où un noyau de la fibre multi-noyau définit un canal, et les blocs partiels sont mis à disposition pour une transmission parallèle par la fibre multi-noyau, où l'identification de canal indique un numéro de canal qui est associé au bloc partiel à transmettre.

13. Procédé de décryptage de données qui sont mises à disposition par le procédé selon la revendication 12 et sont transmises par le support de transmission (200), aux étapes suivantes consistant à:
vérifier (S114, S114') une transmission sans manipulation des données sur base de la valeur de code reçue, de la part du bloc de données cryptées dans le bloc partiel et de l'identification de canal associée au canal;
combiner (S116) les blocs partiels reçus pour obtenir le bloc de données cryptées; et
décrypter (S118) le bloc de données cryptées.

14. Procédé de transmission de données par un support de transmission (200), avec le fait de:
mettre à disposition (S100 à S108, S100 à 8108') les données cryptées pour une transmission par un support de transmission (200) selon la revendication 12 ou 13;
transmettre (S110, S110') les données par le support de transmission (200); et
décrypter (S112 à S118, S112' à S118) les données transmises selon la revendication 13.

15. Programme d'ordinateur avec des instructions pour réaliser le procédé selon l'une des revendications 12 à 14 lorsque les instructions sont exécutées par un ordinateur.
